(19) **Europäisches Patentamt / European Patent Office / Office européen des brevets**

(11) **EP 2 688 303 A1**

(12) # EUROPEAN PATENT APPLICATION
published in accordance with Art. 153(4) EPC

(43) Date of publication:
**22.01.2014 Bulletin 2014/04**

(21) Application number: **12793581.5**

(22) Date of filing: **22.05.2012**

(51) Int Cl.:
*H04N 13/00* (2006.01)    *H04N 5/225* (2006.01)
*H04N 5/91* (2006.01)    *H04N 5/92* (2006.01)
*H04N 7/32* (2006.01)

(86) International application number:
**PCT/JP2012/063031**

(87) International publication number:
**WO 2012/165218 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011120187**

(71) Applicant: **Sony Corporation Tokyo 108-0075 (JP)**

(72) Inventors:
• **HAMADA Toshiya Tokyo 108-0075 (JP)**
• **ARIDOME Kenichiro Tokyo 108-0075 (JP)**
• **MAE Atsushi Tokyo 108-0075 (JP)**

(74) Representative: **Robinson, Nigel Alexander Julian D Young & Co LLP 120 Holborn London EC1N 2DY (GB)**

(54) **RECORDING DEVICE, RECORDING METHOD, PLAYBACK DEVICE, PLAYBACK METHOD, PROGRAM, AND RECORDING/PLAYBACK DEVICE**

(57)    The present technique relates to a recording apparatus, a recording method, a reproduction apparatus, a reproduction method, a program, and a recording reproduction apparatus capable of providing an apparatus at a reproduction side with information about multiple cameras used for image capturing. A recording apparatus according to an aspect of the present technique, including an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and information about a focal length, and a recording control unit that records, to a recording medium, Base view video stream and the Non-base view video stream recorded with the SEI.

*FIG. 4*

**Description**

TECHNICAL FIELD

The present technique more particularly relates to a recording apparatus, a recording method, a reproduction apparatus, a reproduction method, a program, and a recording reproduction apparatus capable of providing an apparatus at a reproduction side with information about multiple cameras used for image capturing.

BACKGROUND ART

In recent years, 3D contents recorded with images that can be seen stereoscopically attract attention. 3D content video data include data of a left eye image (L image) and a right eye image (R image). There is deviation corresponding to parallax between a subject appearing in the L image and the subject appearing in the R image.

For example, an L image and an R image having parallax are alternately displayed, and they are delivered to the left and the right eyes of the user wearing active shutter glasses, whereby a subject can be recognized stereoscopically.

CITATION LIST

Patent Document

Patent Document 1: JP 2007-280516 A

SUMMARY OF THE INVENTION

PROBLEMS TO BE SOLVED BY THE INVENTION

The parallax perceived by the user is different depending on viewing environment, and therefore, it is difficult to allow the user to view an image with the optimum parallax. For example, the optimum parallax is different depending on the size of a display image on the display device, and the optimum parallax is different depending on the viewing distance.

The positions and the like of the cameras during image capturing are estimated from the L image and the R image, and the parallax is tried to be adjusted in accordance therewith, but it is difficult for the reproduction side to completely recover the situation during image capturing.

The present technique is made in view of such circumstances, and it is to provide an apparatus at a reproduction side with information about multiple cameras used for image capturing.

SOLUTIONS TO PROBLEMS

A recording apparatus according to a first aspect of the present technique includes an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and information about a focal length, and a recording control unit that records, to a recording medium, Base view video stream and the Non-base view video stream recorded with the SEI.

Each of the first camera and the second camera has at least a lens. Each of an image capturing device for a first camera and an image capturing device for a second camera may be provided as an image capturing device performing photoelectric conversion of light received by the lens, or one image capturing device may be shared and used by the first camera and the second camera.

The first camera and the second camera may be provided within the recording apparatus or outside of the recording apparatus. When they are provided outside of the recording apparatus, the images captured by the first camera and the second camera may be provided to the recording apparatus by wired or wireless communication.

The first camera capturing the left eye image and the second camera capturing the right eye image may further be provided. In this case, the encoding unit can be caused to encode the left eye image captured by the first camera as the Base view video stream and encode the right eye image captured by the second camera as the Non-base view video stream.

The encoding unit can record information including two values as the information about the optical axis interval.

In this case, the optical axis interval of the first camera and the second camera is represented by subtracting one of the two values from the other of the two values.

The encoding unit can record information including two values as the information about the convergence angle. In this case, the convergence angle of the first camera and the second camera is represented by subtracting one of the two values from the other of the two values.

A reproduction apparatus according to a second aspect of the present technique includes a decoding unit that decodes Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

A display control unit that adjusts and displays parallax between an image obtained by decoding the Base view video stream and an image obtained by decoding the Non-base view video stream on the basis of the SEI may further be provided.

The display control unit may cause an image obtained by decoding the Base view video stream to be displayed as a left eye image, and the display control unit may cause an image obtained by decoding the Non-base view video stream to be displayed as a right eye image.

A recording reproduction apparatus according to a third aspect of the present technique includes an encoding unit that encodes an image captured by a first camera and an image captured by a second camera according to H. 264/MPEG-4 MVC, and records, as SEI of each picture constituting Non-base view video stream, the SEI including at least one of information about an optical axis interval of the first camera and the second camera, information about a convergence angle, and information about a focal length, a recording control unit that records, to a recording medium, Base view video stream and the Non-base view video stream recorded with the SEI, a decoding unit that decodes the Base view video stream and the Non-base view video stream recorded to the recording medium.

EFFECTS OF THE INVENTION

According to the present technique, an apparatus at a reproduction side can be provided with information about multiple cameras used for image capturing.

BRIEF DESCRIPTION OF DRAWINGS

Fig. 1 is a figure illustrating an example of configuration of a recording reproduction system according to an embodiment of the present technique.
Fig. 2 is a figure for explaining H.264/MPEG-4 MVC.
Fig. 3 is a figure for explaining a base line length and a convergence angle.
Fig. 4 is a block diagram illustrating a configuration example of a recording apparatus.
Fig. 5 is a figure illustrating a data structure of Non-base view video stream.
Fig. 6 is a figure illustrating syntax of user_data_unregistered SEI.
Fig. 7 is a figure illustrating mdp_id.
Fig. 8 is a figure illustrating BASELINE LENGTH pack().
Fig. 9 is a figure illustrating CONVERGENCE ANGLE pack().
Fig. 10 is a flowchart for explaining recording processing of the recording apparatus.
Fig. 11 is a block diagram illustrating a configuration example of a reproduction apparatus.
Fig. 12 is a flowchart for explaining reproduction processing of the reproduction apparatus.
Fig. 13 is a flowchart for explaining parallax adjustment processing performed in step S23 of Fig. 12.
Fig. 14 is a figure for explaining relationship between convergence angle, base line length, and parallax.
Fig. 15 is a figure for explaining adjustment of parallax.
Fig. 16 is a block diagram illustrating a configuration example of a recording reproduction system.
Fig. 17 is a block diagram illustrating another configuration example of recording reproduction system.
Fig. 18 is a block diagram illustrating a configuration example of a computer.

MODE FOR CARRYING OUT THE INVENTION

Hereinafter, a mode for carrying out the present technique will be explained. It should be noted that the explanation will be made in the following order.

1. Recording reproduction system
2. Recording apparatus
3. Reproduction apparatus
4. Modification

<Recording reproduction system>

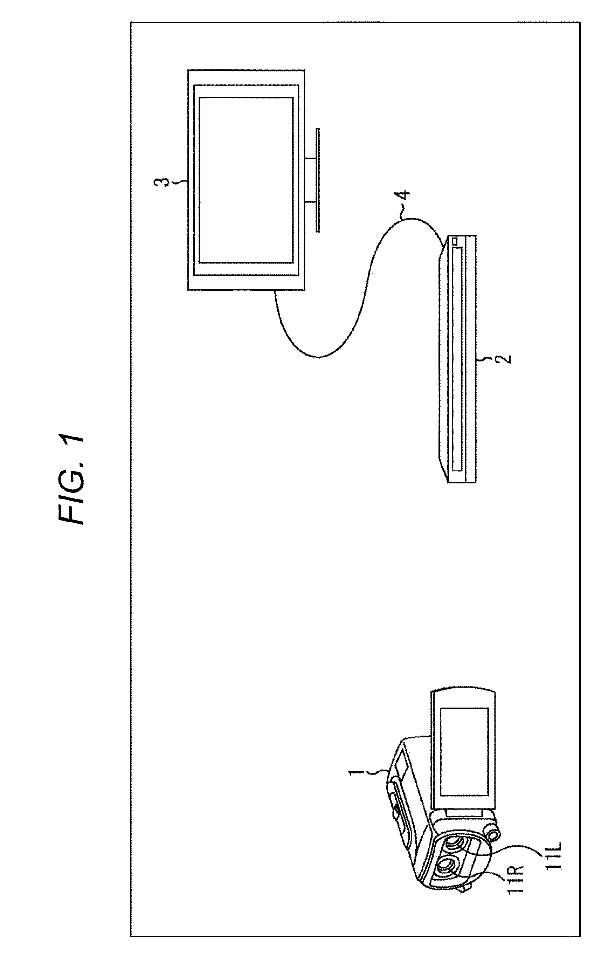

Fig. 1 is a figure illustrating an example of configuration of a recording reproduction system according to an embodiment of the present technique.

The recording reproduction system of Fig. 1 consists of a recording apparatus 1, a reproduction apparatus 2, and a display apparatus 3. The reproduction apparatus 2 and the display apparatus 3 are connected via a cable 4 such as a High Definition Multimedia Interface (HDMI) cable.

The recording apparatus 1 is a video camera capable of capturing and recording 3D images. On the front surface of the recording apparatus 1, a lens 11R is provided at the right side position with respect to a direction from the recording apparatus 1 to the subject, and a lens 11L is provided at the left side position. In the recording apparatus 1, a right eye camera and a left eye camera are provided. The right eye camera has an optical system for generating an R image on the basis of light received by the lens 11R. The left eye camera has an optical system for generating an L image on the basis of light received by the lens 11L.

The recording apparatus 1 encodes the R image and the L image according to H.264/MPEG-4 Multi-view Video coding (MVC), and records the R image and the L image to a recording medium provided therein in accordance with a recording format such as Advanced Video Codec High Definition (AVCHD).

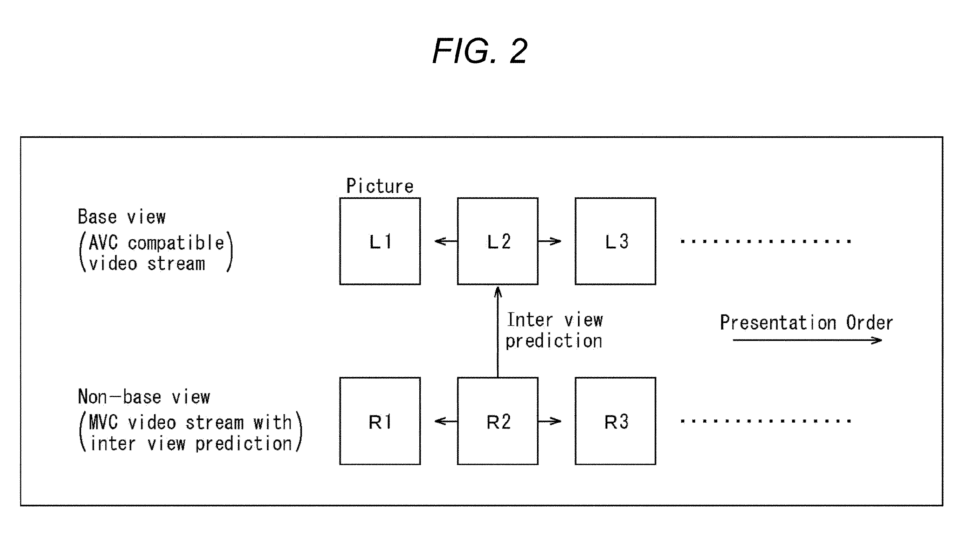

In this case, H.264/MPEG-4 MVC will be explained with reference to Fig. 2. In H.264/MPEG-4 MVC, a video stream called Base view video stream and a video stream called Non-base view video stream are defined.

Base view video stream is a stream obtained by encoding, for example, the L image of the L image and the R image according to H.264/AVC. As indicated by an arrow in vertical direction of Fig. 2, a picture of the Base view is not allowed to be subjected to prediction encoding using a picture of another view as a reference image.

On the other hand, a picture of Non-base view is allowed to be subjected to prediction encoding using a picture of Base view as a reference image. For example, when encoding is performed while the L image is adopted as Base view and the R image is adopted as Non-base view, the amount of data of Non-base view video stream which is a video stream of the R image obtained as a result therefrom is less than the amount of data of Base view video stream which is a video stream of the L image.

Because this is encoding according to H.264/AVC, the picture of Base view is subjected to prediction encoding in a time direction as indicated by an arrow in the horizontal direction of Fig. 2. The picture of Non-base view is subjected to not only inter-view prediction but also the prediction encoding in time direction. In order to decode the picture of Non-base view, the decoding of the picture of corresponding Base view which is referred to during encoding should be finished in advance.

The L image and the R image captured by the recording apparatus 1 are encoded according to such H.264/MPEG-4 MVC. In the recording apparatus 1, camera information which is information about the situation of the cameras, i.e., the left eye camera used for capturing the L image and the right eye camera used for capturing the R image is recorded to the Non-base view video stream during encoding of the L image and the R image.

The camera information includes, for example, information representing the following contents.

1. camera optical axis interval (base line length) [mm]
2. convergence angle [degrees]
3. 35 mm equivalent focal length [mm]

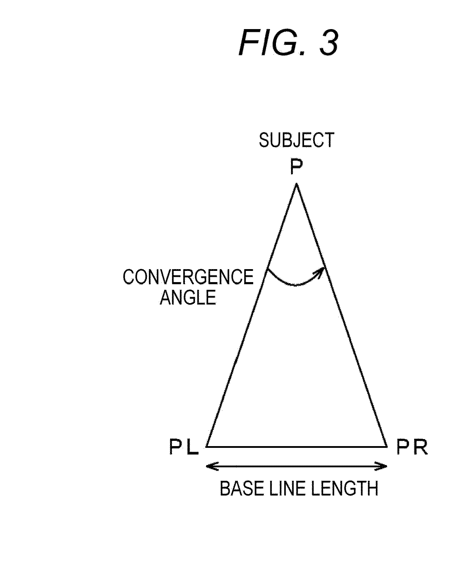

As illustrated in Fig. 3, the base line length is a length (mm) between a position PR which is an optical axis position of the lens 11R and a position PL which is an optical axis position of the lens 11L. Where the position of the subject is a position P, the convergence angle is an angle between a straight line connecting the position P and the position PR and a straight line connecting the position P and position PL.

35 mm equivalent focal length is a focal length (mm) equivalent to 35 mm between the left eye camera and the right eye camera during image capturing.

As explained later, the recording apparatus 1 defines a data structure called Modified DV pack Meta (MDP) in user_data_unregistered SEI of Non-base view video stream, and using the data structure, the camera information is recorded. The user_data_unregistered SEI is any given user data, and is attached to each picture. MDP is additional information recorded in real time during image capturing.

The reproduction apparatus 2 of Fig. 1 is a player capable of reproduction of video data recorded according to AVCHD. The reproduction apparatus 2 imports 3D video data, which are captured by the recording apparatus 1 and recorded to the recording medium in the recording apparatus 1, via Universal Serial Bus (USB) cable, HDMI cable, and the like, and reproduces the 3D video data.

The reproduction apparatus 2 adjusts the parallax between the L image obtained by reproducing the Base view video stream and the R image obtained by reproducing the Non-base view video stream, by making use of the camera information recorded in the Non-base view video stream during image capturing. In order to obtain the optimum parallax when displayed on the display device of the display apparatus 3, the adjustment of the parallax uses, as necessary, information such as the size of the display device of the display apparatus 3.

The reproduction apparatus 2 outputs the L image and the R image of which parallax is adjusted via the cable 4 to the display apparatus 3, and alternately displays the L image and the R image. The display apparatus 3 is a television receiver supporting display of stereo images. The display apparatus 3 is provided with the display device constituted by a Liquid Crystal Display (LCD) and the like.

In this manner, the information about the cameras used for capturing the L image and the R image is recorded to the Non-base view video stream, whereby the recording apparatus 1 can provide the reproduction apparatus 2 with the situation about the installation position and the like of the cameras during image capturing.

The reproduction apparatus 2 can obtain the situation of the cameras during the image capturing process, by referring to the camera information recorded to the Non-base view video stream. In addition, the reproduction apparatus 2 adjusts the parallax between the L image and the R image in accordance with the situation of the cameras during the image capturing process, so that the relationship of the positions of the recording apparatus 1 and the subject can be reproduced, whereby easy-to-see images can be provided to the user.

<Recording apparatus>

[Configuration of recording apparatus]

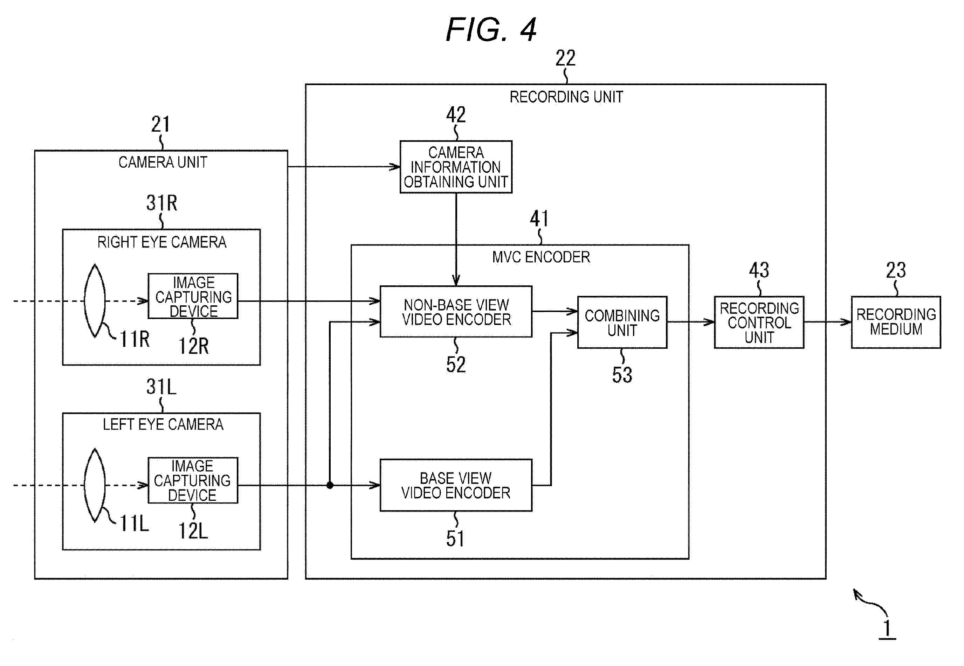

Fig. 4 is a block diagram illustrating a configuration example of the recording apparatus 1. The recording apparatus 1 consists of a camera unit 21, a recording unit 22, and a recording medium 23.

The camera unit 21 consists of a right eye camera 31R and a left eye camera 31L.

The right eye camera 31R consists of the lens 11R and an image capturing device 12R, and the image capturing device 12R performs photoelectric conversion of light received by the lens 11R. The right eye camera 31R performs processing such as A/D conversion on a video signal obtained by performing the photoelectric conversion, and outputs data of the R image.

The left eye camera 31L consists of the lens 11L and an image capturing device 12L, and the image capturing device 12L performs photoelectric conversion of light received by the lens 11L. The left eye camera 31L performs processing such as A/D conversion on a video signal obtained by performing the photoelectric conversion, and outputs data of the L image.

The recording unit 22 consists of an MVC encoder 41, a camera information obtaining unit 42, and a recording control unit 43.

The MVC encoder 41 encodes the R image captured by the right eye camera 31R and the L image captured by the left eye camera 31L according to H.264/MPEG-4 MVC. The MVC encoder 41 consists of a Base view video encoder 51, a Non-base view video encoder 52, and a combining unit 53. The data of the R image which is output from the right eye camera 31R is input into the Non-base view video encoder 52, and the data of the L image which is output from the left eye camera 31L is input into the Base view video encoder 51 and the Non-base view video encoder 52.

The Base view video encoder 51 encodes the L image captured by the left eye camera 31L according to H.264/AVC, and outputs the Base view video stream to the combining unit 53.

The Non-base view video encoder 52 encodes the R image captured by the right eye camera 31R using, as necessary, the L image captured by the left eye camera 31L as a reference image, and generates the Non-base view video stream.

The Non-base view video encoder 52 adds, as SEI of each picture of the Non-base view video stream, user_data_unregistered SEI indicating the base line length, the convergence angle, and the 35 mm equivalent focal length, provided by the camera information obtaining unit 42. The camera information obtaining unit 42 provides information about the base line length, the convergence angle, and the 35 mm equivalent focal length of the right eye camera 31R and the left eye camera 31L which is the camera information obtained from the camera unit 21.

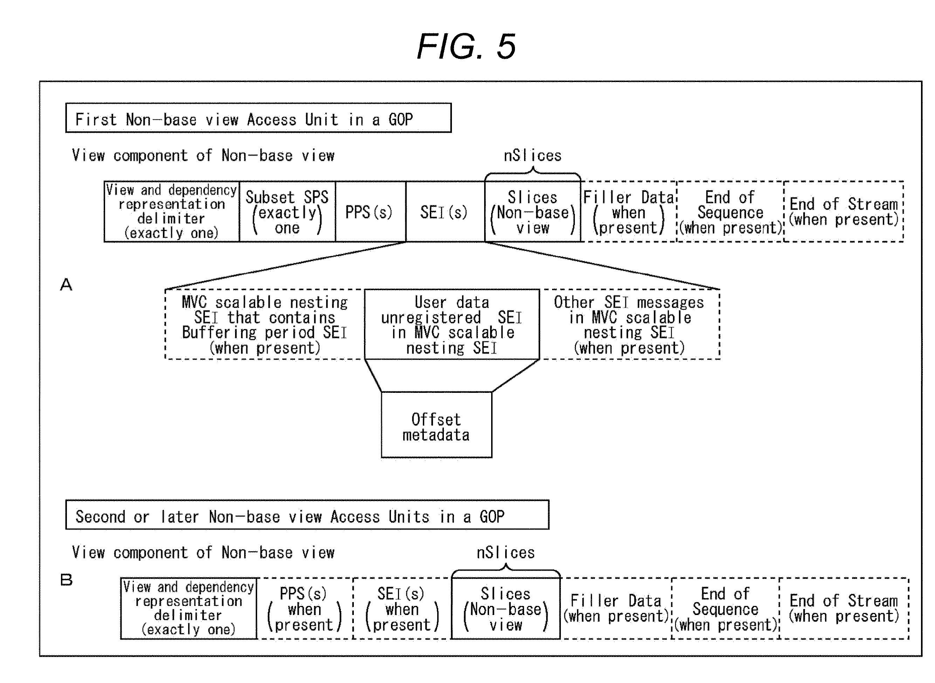

Fig. 5 is a figure illustrating a data structure of Non-base view video stream.

A of Fig. 5 is a figure illustrating a data structure of Access Unit storing data of the first picture among the pictures included in one Group Of Picture (GOP). In H.264/AVC, data for one picture are stored in one Access Unit.

As illustrated in A of Fig. 5, the Access Unit storing data of the first picture of the Non-base view consists of View and dependency representation delimiter, Subset Sequence Parameter Set (SPS), Picture Parameter Set (PPS), Supplemental Enhancement Information (SEI), and Slice.

The View and dependency representation delimiter indicates the first Access Unit. The Subset SPS includes information about encoding of the entire sequence, and the PPS includes information about encoding of the picture of which data are stored in the Access Unit. The SEI is additional information, and includes various kinds of SEI messages such as MVC_scalable_nesting SEI, user_data_unregistered SEI, and the like.

In the example of A of Fig. 5, for example, user_data_unregistered SEI of information (Offset metadata) about parallax of subtitles displayed during reproduction. The information about the base line length, the convergence angle, and the 35 mm equivalent focal length obtained by the camera information obtaining unit 42 is recorded as user_data_unregistered SEI which is different from user_data_unregistered SEI of information about parallax of subtitles.

A Slice subsequent to the SEI is data of the first picture (R image) of 1 GOP. Subsequent to the Slice, it may possible to include Filler Data, End of Sequence, End of stream.

B of Fig. 5 is a figure illustrating a data structure of Access Unit storing data of the second and subsequent pictures among the pictures included in one GOP. As illustrated in B of Fig. 5, the Access Unit storing data of the second and subsequent picture of one GOP consists of View and dependency representation delimiter and Slice. Information such as PPS, SEI may also be included.

The data structure of the Access Unit of the Base view video stream generated by the Base view video encoder 51 basically has the same data structure as the data structure as illustrated in Fig. 5 except that user_data_unregistered SEI representing the base line length, the convergence angle, and the 35 mm equivalent focal length are not recorded.

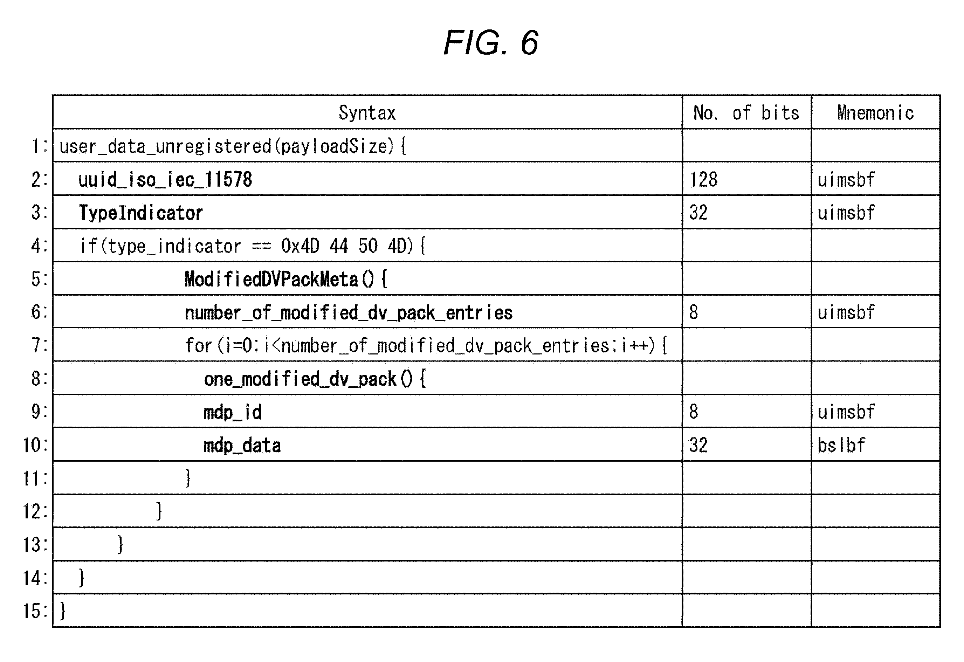

Fig. 6 is a figure illustrating syntax of user_data_unregistered SEI storing MDP concerning the base line length, the convergence angle, and the 35 mm equivalent focal length.

uuid_iso_iec_11578 in the second line is a field having 128 bits,. "17ee8c60-f84d-11d9-8cd6-0800200c9a66" is set in this field.

TypeIndicator in the third line is a field having 32 bits, and indicates the type of user data transmitted by the SEI message. "0x4D 44 50 4D" represents MDP. When TypeIndicator is "0x4D 44 50 4D", ModifiedDVPackMeta() of the fifth line and subsequent lines is set. ModifiedDVPackMeta() includes number_of_modified_dv_pack_entries and one_modified_dv_pack().

number_of_modified_dv_pack_entries in the sixth line is a field having 8 bits, and represents the number of one_modified_dv_pack() included in user_data_unregistered SEI. one_modified_dv_pack() includes mdp_id and mdp_data.

mdp_id in the ninth line is a field having 8 bits, and represents the type of one_modified_dv_pack() including this field.

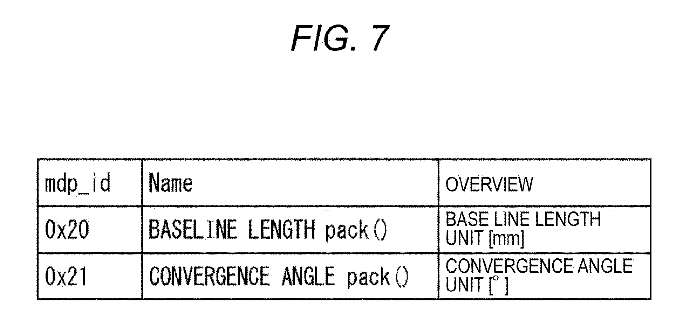

Fig. 7 is a figure illustrating mdp_id. As illustrated in Fig. 7, when mdp_id is 0x20, this indicates that one_modified_dv_pack() is BASELINE LENGTH pack(). BASELINE LENGTH pack() is one_modified_dv_pack() including information about the base line length as mdp_data.

When mdp_id is 0x21, this indicates that one_modified_dv_pack() is CONVERGENCE ANGLE pack(). CONVERGENCE ANGLE pack() is one_modified_dv_pack() including information about the convergence angle as mdp_data.

The 35 mm equivalent focal length represents FOCAL_LENGTH in existing Consumer Camera2 pack(). Consumer Camera2 pack() is one_modified_dv_pack() where mdp_id is 0x71.

mdp_data in the tenth line in Fig. 6 is a field having 32 bits, and represents any one of the base line length, the convergence angle, and the 35 mm equivalent focal length. A fixed value may always be set as mdp_data.

The following rules are applied to ModifiedDVPackMeta().
The size of one ModifiedDVPackMeta() including emulation prevention bytes is 255 bytes or less.
In one picture, multiple user_data_unregistered SEI messages including ModifiedDVPackMeta() may not be added.
When, in the first field of the complementary field pair, there is no user_data_unregistered SEI message including ModifiedDVPackMeta(), the second field may not include user_data_unregistered SEI message including Modified-DVPackMeta().

In each of the Base view and the Non-base view, the summation of mdp_data is 255 bytes or less, and the summation of user_data_unregistered_SEI is 511 bytes or less.

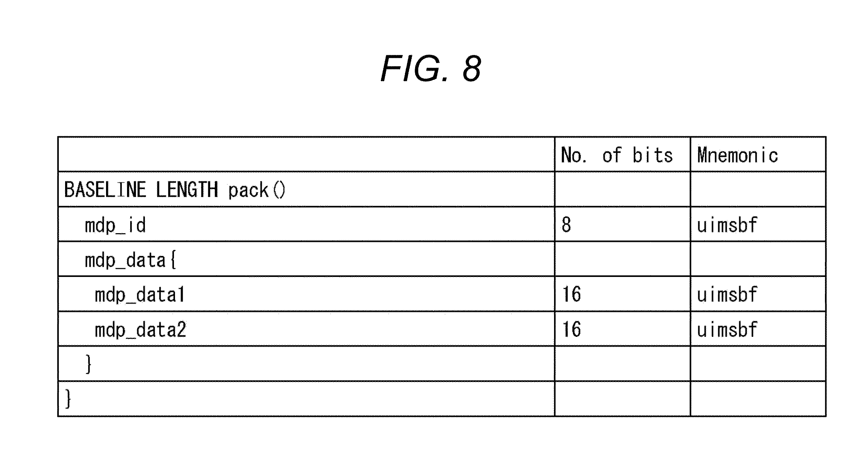

Fig. 8 is a figure illustrating BASELINE LENGTH pack().

BASELINE LENGTH pack() includes mdp_id, mdp_data1, and mdp_data2. mdp_id of BASELINE LENGTH pack() is 0x20 as explained above.

Each of mdp_data1 and mdp_data2 is a field having 16 bits, and indicates the base line length in unit of mm with two values, i.e., mdp_data1 and mdp_data2. The base line length [mm] is represented by the following expression (1).

```
baseline length [mm] = mdp_data1/mdp_data2  ••• (1)
```

When the base line length is represented using two values, a length equal to or less than 1 mm can be represented. When mdp_data1 = mdp_data2 = 0xFFFF holds, this indicates that the base line length is unknown, or no information.

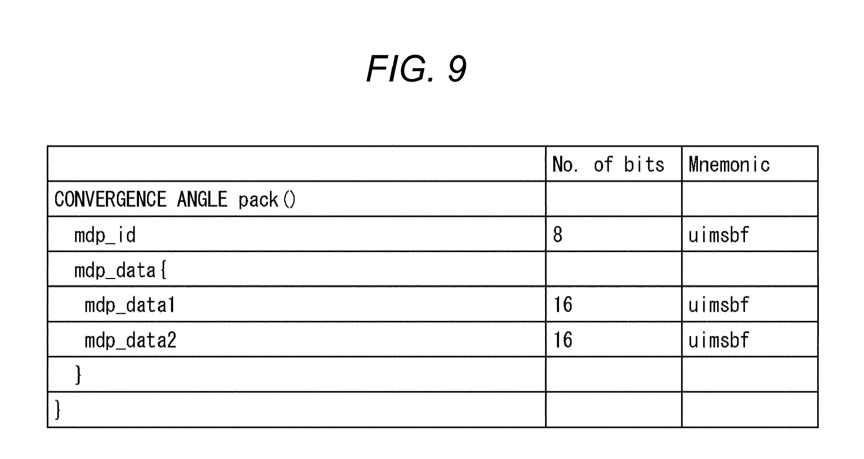

Fig. 9 is a figure illustrating CONVERGENCE ANGLE pack().

CONVERGENCE ANGLE pack() includes mdp_id, mdp_data1, and mdp_data2. mdp_id of CONVERGENCE ANGLE pack() is 0x21 as explained above.

Each of mdp_data1 and mdp_data2 is a field having 16 bits, and indicates the convergence angle in unit of degrees with two values, i.e., mdp_data1 and mdp_data2. The convergence angle [degree] is represented by the following expression (2). The convergence angle is equal to or more than 0 degrees, but less than 180 degrees.

$$\text{convergence angle [degree] = mdp\_data1/mdp\_data2}$$

$$\cdots \quad (2)$$

When the convergence angle is represented using two values, an angle equal to or less than 1 degree can be represented. When mdp_data1 = mdp_data2 = 0xFFFF holds, this indicates that the convergence angle is unknown, or no information.

The Non-base view video encoder 52 of Fig. 4 outputs, to the combining unit 53, the Non-base view video stream recorded with information about the base line length, the convergence angle, and the 35 mm equivalent focal length as described above.

The combining unit 53 combines the Base view video stream provided from the Base view video encoder 51 and the Non-base view video stream provided from the Non-base view video encoder 52, and outputs it as the encoded data according to H.264/MPEG-4 MVC to the recording control unit 43.

The camera information obtaining unit 42 obtains the information about the base line length, the convergence angle, and the 35 mm equivalent focal length from, for example, the camera unit 21, and outputs the information to the Non-base view video encoder 52.

The recording control unit 43 records the encoded data provided from the MVC encoder 41 to the recording medium 23 according to, for example, AVCHD.

The recording medium 23 is constituted by a flash memory, a hard disk, or the like, and records the encoded data in accordance with the control of the recording control unit 43. A memory card inserted into a slog provided in the housing of the recording apparatus 1 may be used as the recording medium 23. The encoded data recorded to the recording medium 23 are transferred to the reproduction apparatus 2, when the recording apparatus 1 is connected to the reproduction apparatus 2 via a USB cable and the like.

[Operation of recording apparatus 1]

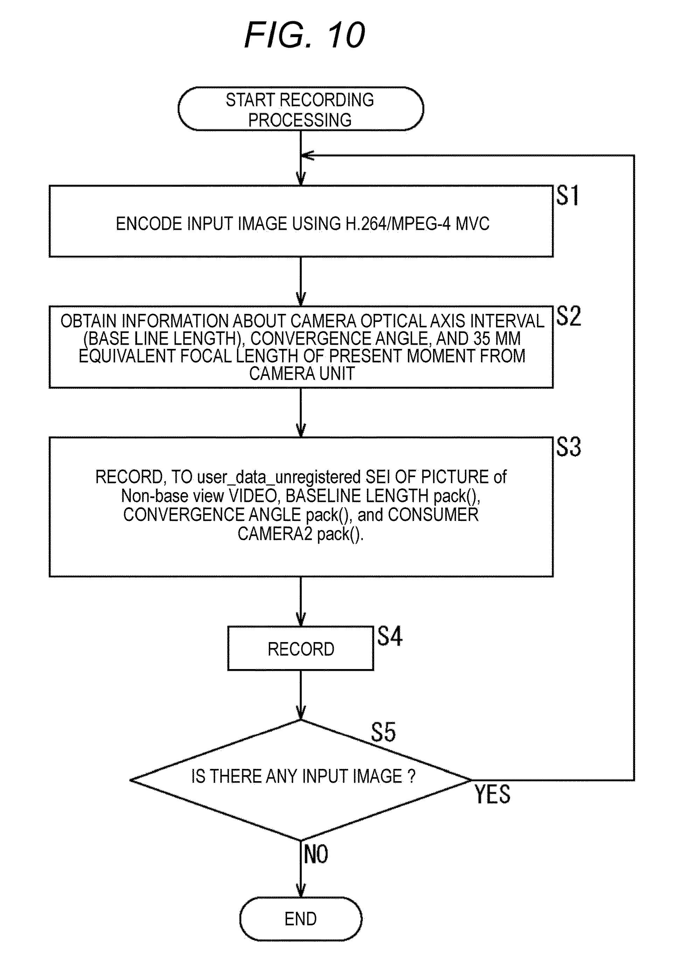

Hereinafter, recording processing of the recording apparatus 1 will be explained with reference to the flowchart of Fig. 10. The processing of Fig. 10 is started when the R image captured by the right eye camera 31R and the L image captured by the left eye camera 31L are input into the recording unit 22.

In step S1, the MVC encoder 41 encodes the image received from the camera unit 21 using H.264/MPEG-4 MVC. More specifically, the Base view video encoder 51 encodes the L image captured by the left eye camera 31L according to H.264/AVC, and generates the Base view video stream. The Non-base view video encoder 52 encodes the R image captured by the right eye camera 31R using, as necessary, the L image as a reference image, and generates the Non-base view video stream.

In step S2, the camera information obtaining unit 42 obtains the information about the base line length, the convergence angle, and the 35 mm equivalent focal length of the present moment from the camera unit 21.

In step S3, the Non-base view video encoder 52 records, to user_data_unregistered SEI of each picture of Non-base view, BASELINE LENGTH pack() representing the base line length, CONVERGENCE ANGLE pack() representing the convergence angle, and Consumer Camera2 pack() representing the 35 mm equivalent focal length. The Base view video stream generated by the Base view video encoder 51, and the Non-base view video stream recorded with BASELINE LENGTH pack(), CONVERGENCE ANGLE pack(), Consumer Camera2 pack() generated by the Non-base view video encoder 52 are combined by the combining unit 53, and provided to the recording control unit 43.

In step S4, the recording control unit 43 records the encoded data of H.264/MPEG-4 MVC provided from the combining unit 53 to the recording medium 23.

In step S5, the MVC encoder 41 determines whether there is any input image from the camera unit 21, and when the MVC encoder 41 determines that there is input image therefrom, the processing of step S1 and subsequent steps is repeated. The processing of steps S1 to S4 is performed on the image data of each picture. On the other hand, when the camera unit 21 finishes the image capturing, and it is determined that there is no input image in step S5, the processing is terminated.

According to the above processing, the recording apparatus 1 can record the information about the base line length, the convergence angle, and the 35 mm equivalent focal length about the camera used for capturing the stereo image, to the encoded data of each picture of the Non-base view, and can provide the camera information to the reproduction apparatus 2.

In addition, the recording apparatus 1 does not record the camera information to the Base view video stream but records it to the Non-base view video stream, so that the reproduction apparatus 2 can display only the L image (2D image) by reproducing the Base view video stream. The Base view video stream is a stream encoded according to H.264/AVC, and therefore, any device supporting H.264/AVC can reproduce the video data imported from the recording apparatus 1 even if it is an existing reproduction apparatus 2.

In the above explanation, the information about the base line length, the convergence angle, and the 35 mm equivalent focal length is recorded to the Non-base view video stream, but the convergence angle may be a fixed value, and only the information about the base line length may be recorded, or the base line length may be a fixed value, and only the information about the convergence angle may be recorded. Alternatively, the information about the 35 mm equivalent focal length may be recorded.

Information, other than the base line length and the convergence angle, concerning the installation situation of the right eye camera 31R and the left eye camera 31L may be recorded.

<Reproduction apparatus 2>

[Configuration of reproduction apparatus 2]

The reproduction apparatus 2 for reproducing the encoded data of H.264/MPEG-4 MVC captured by the recording apparatus 1 and recorded to the recording medium 23 will be explained.

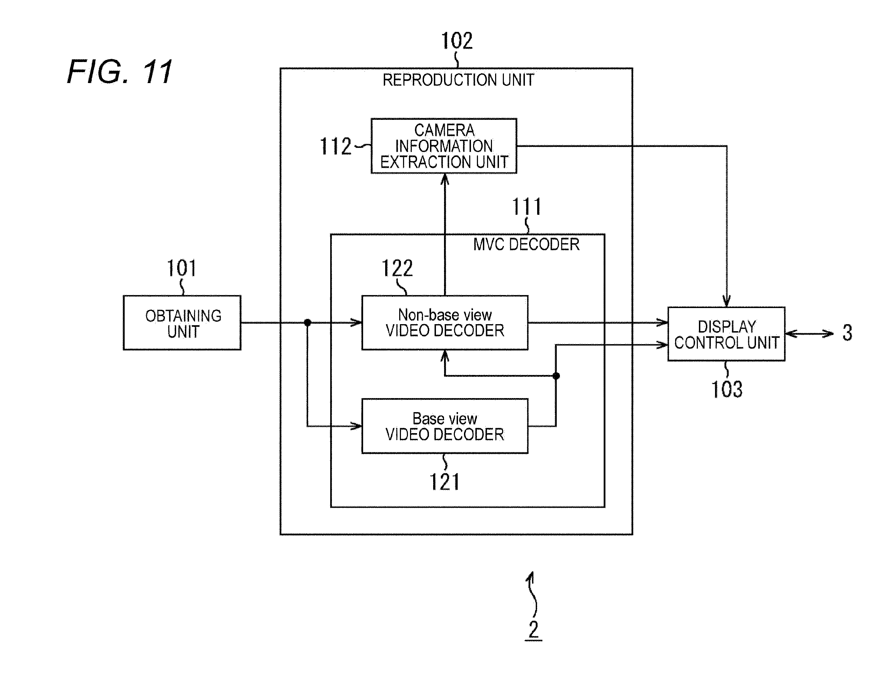

Fig. 11 is a block diagram illustrating a configuration example of the reproduction apparatus 2. The reproduction apparatus 2 consists of an obtaining unit 101, a reproduction unit 102, and a display control unit 103.

The obtaining unit 101 obtains and outputs the 3D video data, which are the encoded data of H.264/MPEG-4 MVC, via the USB cable and the like from the recording apparatus 1. The 3D video data which are output from the obtaining unit 101 are input into the Base view video decoder 121 and the Non-base view video decoder 122 of the MVC decoder 111. The 3D video data imported from the recording apparatus 1 may be once recorded to the recording medium in the reproduction apparatus 2, and the 3D video data may be imported by the obtaining unit 101 from the recording medium.

The reproduction unit 102 consists of an MVC decoder 111 and a camera information extraction unit 112. The MVC decoder 111 decodes the 3D video data according to H.264/MPEG-4 MVC. The MVC decoder 111 consists of a Base view video decoder 121 and a Non-base view video decoder 122.

The Base view video decoder 121 decodes the Base view video stream, which is included in the 3D video provided from the obtaining unit 101, according to H.264/AVC, and outputs the L image. The L image which is output from the Base view video decoder 121 is provided to the Non-base view video decoder 122 and the display control unit 103.

The Non-base view video decoder 122 decodes the Non-base view video stream included in the 3D video provided from the obtaining unit 101 using, as necessary, the L image decoded by the Base view video decoder 121 as the reference image, and outputs the R image. The R image which is output from the Non-base view video decoder 122 is provided to the display control unit 103.

The camera information extraction unit 112 obtains, from user_data_unregistered SEI of each picture of Non-base view which are to be decoded by the Non-base view video decoder 122, BASELINE LENGTH pack() representing the base line length, CONVERGENCE ANGLE pack() representing the convergence angle, and Consumer Camera2 pack() representing the 35 mm equivalent focal length.

The camera information extraction unit 112 acquires the base line length by calculating the above expression (1) on the basis of the two values included in BASELINE LENGTH pack(), and acquires the convergence angle by calculating the above expression (2) on the basis of the two values included in CONVERGENCE ANGLE pack(). The camera information extraction unit 112 also identifies the 35 mm equivalent focal length from Consumer Camera2 pack(). The camera information extraction unit 112 outputs the information about the base line length, the convergence angle, and the 35 mm equivalent focal length to the display control unit 103.

The display control unit 103 adjusts the parallax of the L image provided from the Base view video decoder 121 and the R image provided from the Non-base view video decoder 122, by using the information about the base line length, the convergence angle, and the 35 mm equivalent focal length obtained from the camera information extraction unit 112. The display control unit 103 communicates with the display apparatus 3 to obtain information about, e.g., the size of the display device of the display apparatus 3 and the like from the display apparatus 3, and uses it for the adjustment of the parallax.

The display control unit 103 outputs the L image and the R image, of which parallax is adjusted to attain the optimum parallax when displayed on the display device of the display apparatus 3, to the display apparatus 3, and thus, the L image and the R image are displayed.

[Operation of reproduction apparatus 2]

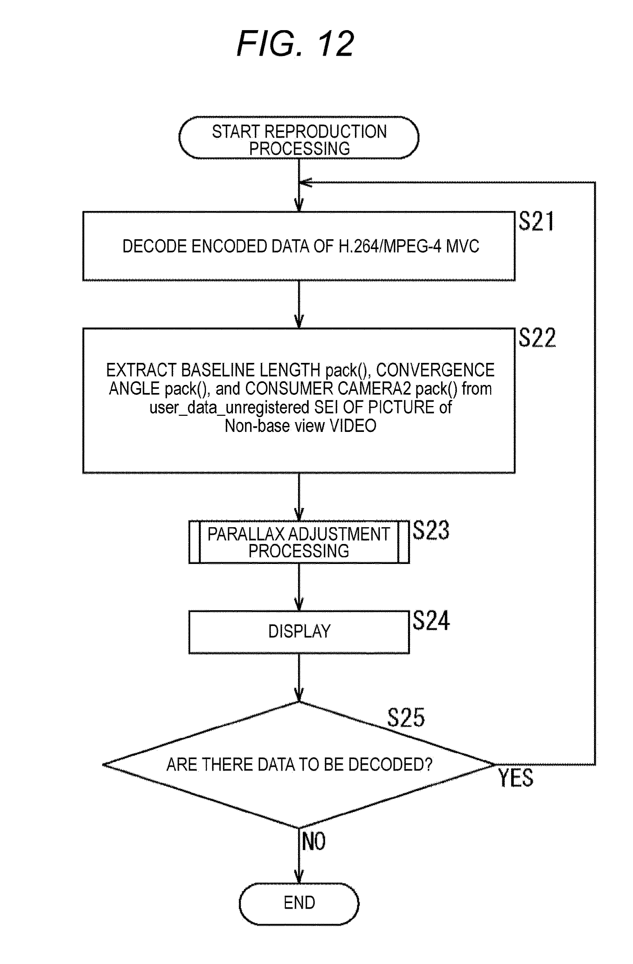

Hereinafter, reproduction processing of the reproduction apparatus 2 will be explained with reference to the flowchart of Fig. 12. The processing of Fig. 12 is started when, for example, 3D video data are input from the obtaining unit 101 into the reproduction unit 102.

In step S21, the MVC decoder 111 decodes the 3D video data which are input from the obtaining unit 101 using H.264/MPEG-4 MVC. More specifically, the Base view video decoder 121 decodes the Base view video stream according to H.264/AVC. The non-base view video decoder 122 decodes the Non-base view video stream using, as necessary, the L image decoded by the Base view video decoder 121 as the reference image.

The L image obtained when the Base view video decoder 121 decodes the Base view video stream and the R image obtained when the Non-base view video decoder 122 decodes the Non-base view video stream are provided to the display control unit 103.

In step S22, the camera information extraction unit 112 extracts BASELINE LENGTH pack(), CONVERGENCE ANGLE pack(), and Consumer Camera2 pack() from user_data_unregistered SEI of each picture of Non-base view. The camera information extraction unit 112 outputs, to the display control unit 103, information about the base line length acquired based on BASELINE LENGTH pack(), the convergence angle acquired based on CONVERGENCE ANGLE pack(), and the 35 mm equivalent focal length obtained from Consumer Camera2 pack().

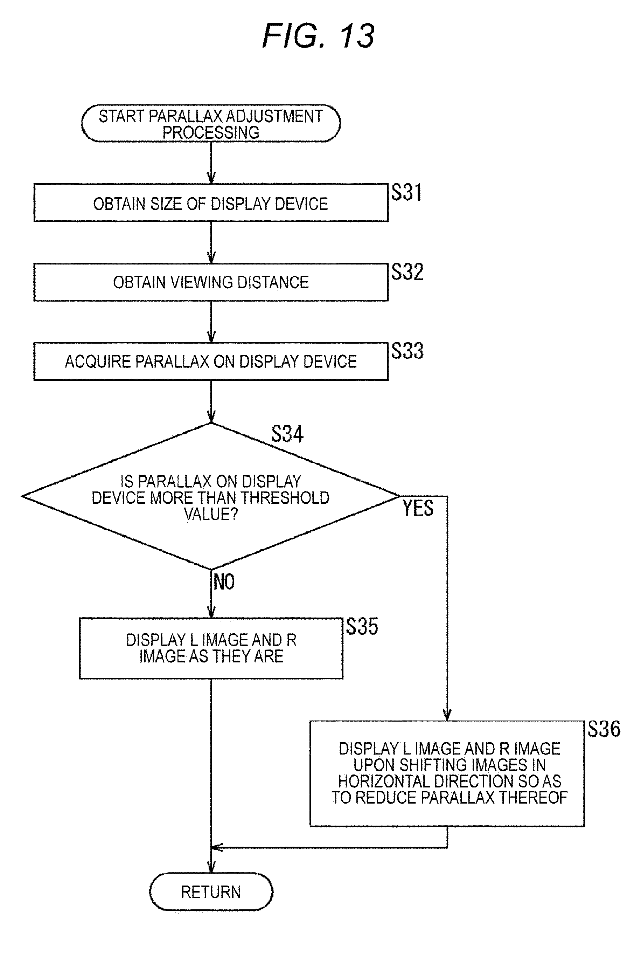

In step S23, the display control unit 103 performs the parallax adjustment processing. The parallax adjustment processing will be explained later with reference to the flowchart of Fig. 13.

In step S24, the display control unit 103 outputs the L image and the R image of which parallax is adjusted to the display apparatus 3, and the L image and the R image are displayed.

In step S25, the MVC decoder 111 determines whether there is any encoded data to be decoded, and when the MVC decoder 111 determines that there exists encoded data to be decoded, the processing of step S21 and subsequent steps is repeated. The processing in step S21 to S24 is performed on the encoded data of each picture. On the other hand, when all the encoded data are decoded, and therefore it is determined that there is no more encoded data in step S25, the processing is terminated.

Subsequently, the parallax adjustment processing performed in step S23 of Fig. 12 will be explained with reference to the flowchart of Fig. 13.

In step S31, the display control unit 103 communicates with the display apparatus 3, and obtains the size of the display device of the display apparatus 3. The size of the display device of the display apparatus 3 may be directly set by the user with the reproduction apparatus 2.

In step S32, the display control unit 103 obtains, from the display apparatus 3, the viewing distance which is the distance from the surface of the display device of the display apparatus 3 to the user. The viewing distance may be directly set by the user with the reproduction apparatus 2.

The amount of parallax perceived by the user also changes according to the viewing distance. Therefore, when the viewing distance can be obtained, the parallax can be adjusted more accurately by using the information. In the explanation below, a case where the parallax is adjusted without considering the viewing distance will be explained.

In step S33, the display control unit 103 acquires the parallax of the L image and the R image on the display device of the display apparatus 3 where the parallax is not adjusted.

In step S34, the display control unit 103 determines whether the parallax of the L image and the R image on the display device is more than a threshold value or not.

When the parallax of the L image and the R image on the display device is determined not to be more than the threshold value in step S34, the display control unit 103 outputs the L image and the R image to the display apparatus 3 without adjusting the parallax as they are, and the L image and the R image are displayed in step S35.

On the other hand, when the parallax of the L image and the R image on the display device is determined to be more than the threshold value in step S34, the display control unit 103 shifts the L image and the R image on the display device in the horizontal direction so as to reduce the parallax of the L image and the R image, and thus the L image and the R image are displayed in step S36. Thereafter, step S23 of Fig. 12 is performed back again, and the processing subsequent thereto is performed.

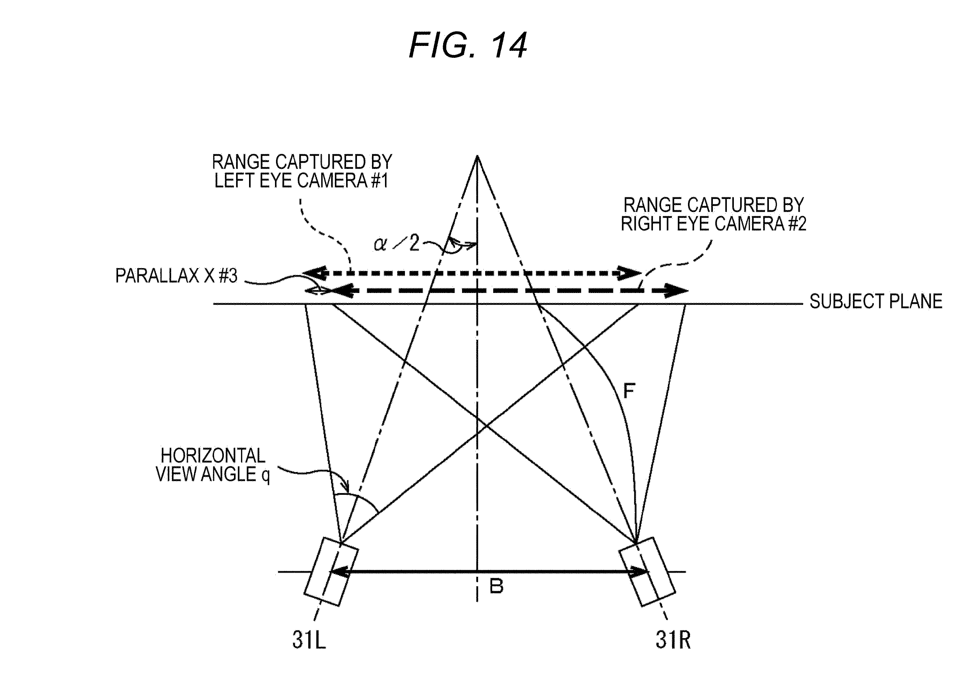

Fig. 14 is a figure for explaining relationship between convergence angle, base line length, and parallax.

On the subject plane as illustrated in Fig. 14, the range indicated by a broken line arrow #1 is a range captured by the left eye camera 31L, and the range indicated by a broken line arrow #2 is a range captured by the right eye camera 31R. $\alpha$ denotes a convergence angle, and B denotes a base line length. F denotes a subject distance.

When the parallax on the display device is to be calculated, first, the display control unit 103 acquires how much the images of the focus position (images of the subject) is captured by the left eye camera 31L and the right eye camera 31R in the horizontal direction. The amount of deviation in the horizontal direction is such that the difference indicated by a solid line arrow #3 is a parallax X.

When the amount of parallax [mm] can be acquired where the horizontal width of image capturing devices of the left eye camera 31L and the right eye camera 31R is assumed to be 35 mm, the amount of parallax on the display device can be calculated from information about the horizontal width of the display device (step S33) . When the amount of parallax on the display device is more than the threshold value, the display control unit 103 shifts the L image and the R image in the horizontal direction so as to reduce the parallax (step S36).

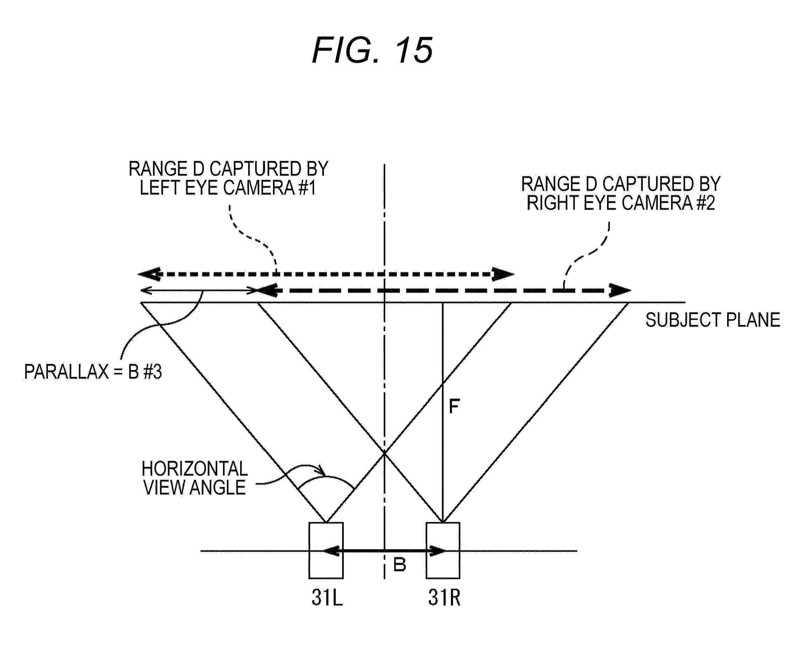

In this case, as illustrated in Fig. 15, the following case will be considered: two cameras of the left eye camera 31L and the right eye camera 31R are arranged horizontally (convergence angle $\alpha$ = 0). At this occasion, the base line length is the same as the parallax.

Where the frame size is x, and the 35 mm equivalent focal length is f, horizontal view angle q is obtained from the following expression (3).

$$\tan (q/2) = x/2f \quad \cdots \quad (3)$$

The image capturing range D [m] in the horizontal direction is acquired from the horizontal view angle q and the subject distance F [m]. When the image capturing range D [m] is captured with a resolution of 1920 pixels, the size of the parallax converted to pixels is 1920 x (B/D) [pixels]. The parallax B is a difference between the image capturing range D [m] of the left eye camera 31L and the image capturing range D [m] of the right eye camera 31R.

In this case, the 35 mm equivalent focal length and the subject distance are already defined in Modified DV pack meta of AVCHD, and therefore this can be used. The 35 mm equivalent focal length is represented by FOCAL_ LENGTH as described above, and the subject distance (focus position) is represented by FOCUS.

When the size of the display device of the display apparatus 3 in the horizontal direction is S [m], the length corresponding to the parallax on the display device is S x (B/D) [m]. When this value is more than the threshold value, the parallax is alleviated by shifting the image in the horizontal direction, whereby the L image and the R image can be displayed with an appropriate parallax.

According to the above processing, the reproduction apparatus 2 can display the L image and the R image with the optimum parallax.

<Modification>

First modification

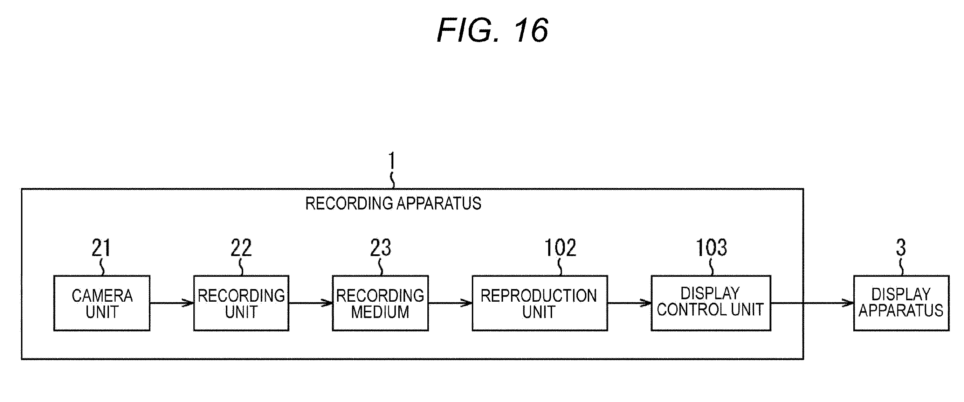

Fig. 16 is a block diagram illustrating a configuration example of a recording reproduction system. The recording apparatus 1 of Fig. 16 is provided with not only a camera unit 21, a recording unit 22, and a recording medium 23, but also a reproduction unit 102 and a display control unit 103. More specifically, the recording apparatus 1 of Fig. 16 has not only the functions of the recording apparatus 1 but also the functions of the reproduction apparatus 2.

The recording apparatus 1 having the configuration of Fig. 16 captures 3D video, and reproduces the captured 3D video obtained as a result of image capturing process according to what is explained with reference to Fig. 12. The L image and the R image reproduced by the recording apparatus 1 are output to the display apparatus 3, and are displayed. The recording apparatus 1 and the display apparatus 3 are connected via, for example, an HDMI cable.

Second modification

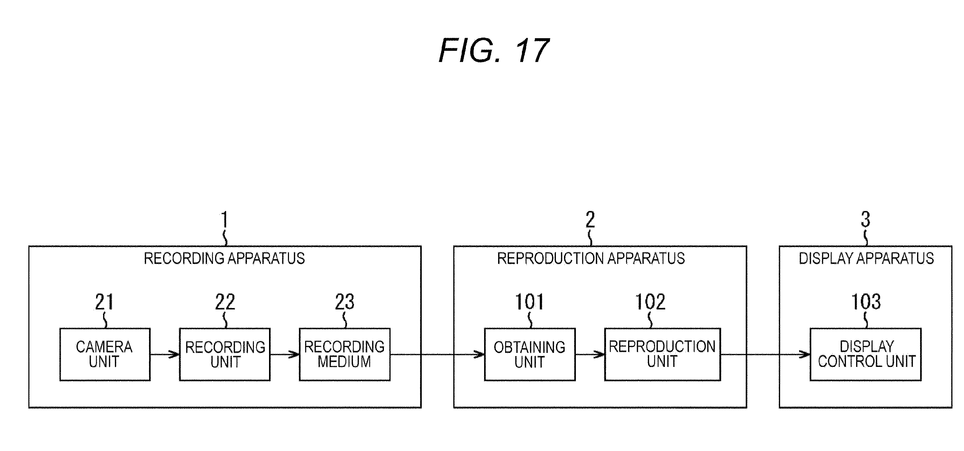

Fig. 17 is a block diagram illustrating another configuration example of recording reproduction system. The recording apparatus 1 of Fig. 17 is provided with a camera unit 21, a recording unit 22, and a recording medium 23, and the reproduction apparatus 2 is provided with an obtaining unit 101 and a reproduction unit 102. The display apparatus 3 is provided with a display control unit 103.

More specifically, the reproduction apparatus 2 of Fig. 17 has the function of decoding the 3D video imported from the recording apparatus 1 according to H.264/MPEG-4 MVC, but unlike the reproduction apparatus 2 of Fig. 11, the reproduction apparatus 2 of Fig. 17 does not have the function of adjusting the parallax of the L image and the R image obtained as a result of decoding. The parallax of the L image and the R image is adjusted by the display apparatus 3.

The recording apparatus 1 having the configuration of Fig. 17 captures 3D video and transfers the 3D video obtained as a result of the image capturing to the reproduction apparatus 2.

The obtaining unit 101 of the reproduction apparatus 2 obtains the 3D video data from the recording apparatus 1, and the reproduction unit 102 decodes the 3D video data obtained by the obtaining unit 101 according to H.264/MPEG-4 MVC. The reproduction unit 102 outputs, to the display apparatus 3, the L image and the R image obtained as a result of decoding as well as the information about the base line length, the convergence angle, and the 35 mm equivalent focal length obtained from user_data_unregistered SEI of the Non-base view video stream.

The display control unit 103 of the display apparatus 3 adjusts the parallax of the L image and the R image provided from the reproduction apparatus 2 on the basis of the information about the base line length, the convergence angle, and the 35 mm equivalent focal length provided from the reproduction apparatus 2, according to what is explained with reference to Fig. 13, and the L image and the R image of which parallax is adjusted are displayed. In this case, information about, e.g., the size of the display device and the like used for adjusting the parallax is information that is already known to the display apparatus 3 that performs adjustment of the parallax.

Third modification

In the above explanation, the camera information about the camera used for capturing the L image and the camera used for capturing the R image is recorded to the Non-base view video stream of H.264/MPEG-4 MVC, but it may also be possible to record the camera information to one stream recorded with the L image and the R image according to side by side method.

For example, H.264 AVC is used for encoding method of the L image and the R image according to the side by side method.

The camera information is recorded to, for example, user_data_unregistered_SEI() of AVC stream.

[Configuration example of computer]

A series of processing explained above may be executed by hardware or may be executed by software. When the series of processing is executed by software, programs constituting the software are installed from a program recording medium to a computer incorporated into dedicated hardware or, e.g., a general-purpose computer.

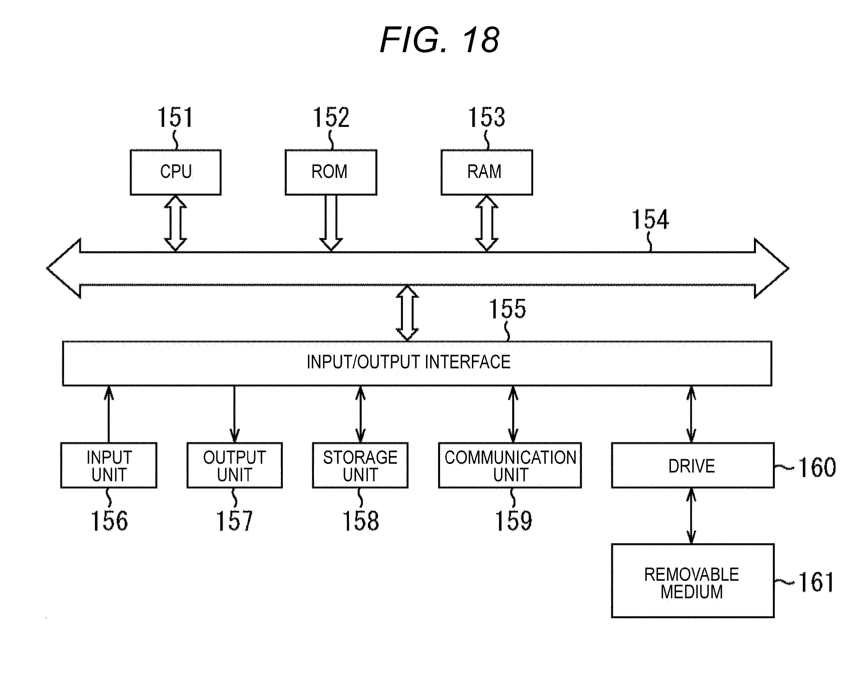

Fig. 18 is a block diagram illustrating a configuration example of hardware of a computer executing the above series of processing using programs.

A Central Processing Unit (CPU) 151, a Read Only Memory (ROM) 152, and a Random Access Memory (RAM) 153 are connected with each other via a bus 154.

This bus 154 is also connected to an input/output interface 155. The input/output interface 155 is connected to an input unit 156 composed of a keyboard, a mouse, and the like, and an output unit 157 composed of a display, a speaker, and the like. The input/output interface 155 is connected to a storage unit 158 composed of a hard disk, a non-volatile memory, and the like, a communication unit 159 composed of a network interface and the like, and a drive 160 for driving removable medium 161.

In the computer configured as described above, for example, the CPU 151 loads the program stored in the storage unit 158 via the input/output interface 155 and the bus 154 to the RAM 153, and executes the program, whereby the above series of processing is performed.

For example, the program executed by the CPU 151 is recorded to the removable medium 161, or provided via a wired or wireless transmission medium such as a local area network, the Internet, and digital broadcast, and installed to the storage unit 158.

The program executed by the computer may be a program with which processing in performed in time sequence according to the order explained in this specification, or may be a program with which processing is performed in parallel or with necessary timing, e.g., upon call.

The embodiment of the present technique is not limited to the above embodiment, and may be changed in various manners as long as it is within the gist of the present technique.

[Combination example of configurations]

The present technique may be configured as follows.

(1)

A recording apparatus including:

an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and information about a focal length; and
a recording control unit that records, to a recording medium, Base view video stream and the Non-base view video stream recorded with the SEI.

(2)

The recording apparatus according to (1) further including:

the first camera that captures a left eye image; and
the second camera that captures a right eye image,
wherein the encoding unit encodes, as the Base view video stream, the left eye image captured by the first camera, and encodes, as the Non-base view video stream, the right eye image captured by the second camera.

(3)

The recording apparatus according to (1) or (2), wherein the encoding unit records information including two values as the information about the optical axis interval, and
the optical axis interval of the first camera and the second camera is represented by subtracting one of the two values from the other of the two values.

(4)

The recording apparatus according to any one of (1) to (3), wherein the encoding unit records information including two values as the information about a convergence angle, and
the convergence angle of the first camera and the second camera is represented by subtracting one of the two values from the other of the two values.

(5)

A recording method including the steps of:

encoding an image captured by a first camera and an image captured by a second camera according to H.264/MPEG-4 MVC;
recording, as SEI of each picture constituting Non-base view video stream, the SEI including at least one of information about an optical axis interval of the first camera and the second camera, information about a convergence angle, and information about a focal length; and
recording, to a recording medium, Base view video stream and the Non-base view video stream recorded with the SEI.

(6)

A program for causing a computer to execute processing including the steps of:

encoding an image captured by a first camera and an image captured by a second camera according to H.264/MPEG-4 MVC;
recording, as SEI of each picture constituting Non-base view video stream, the SEI including at least one of information about an optical axis interval of the first camera and the second camera, information about a convergence angle, and information about a focal length; and
recording, to a recording medium, Base view video stream and the Non-base view video stream recorded with the SEI.

(7)

A reproduction apparatus including a decoding unit that decodes Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

(8)

The reproduction apparatus according to (7) further including a display control unit that adjusts and displays parallax between an image obtained by decoding the Base view video stream and an image obtained by decoding the Non-base view video stream on the basis of the SEI.

(9)

The reproduction apparatus according to (7) or (8), wherein the display control unit causes an image obtained by decoding the Base view video stream to be displayed as a left eye image, and
the display control unit causes an image obtained by decoding the Non-base view video stream to be displayed as a right eye image.

(10)

A reproduction method including the steps of:

decoding Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

(11)

A program for causing a computer to execute processing including the steps of:

decoding Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

(12)

A recording reproduction apparatus including:

an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and information about a focal length;
a recording control unit that records, to a recording medium, Base view video stream and the Non-base view video stream recorded with the SEI;
a decoding unit that decodes the Base view video stream and the Non-base view video stream recorded to the recording medium.

REFERENCE SIGNS LIST

1 recording apparatus, 2 reproduction apparatus, 3 display apparatus, 21 camera unit, 22 recording unit, 23 recording medium, 101 obtaining unit, 102 reproduction unit, 103 display control unit.

**Claims**

1. A recording apparatus comprising:

an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and information about a focal length; and

a recording control unit that records, to a recording medium, Base view video stream and the Non-base view video stream recorded with the SEI.

2. The recording apparatus according to claim 1 further comprising:

the first camera that captures a left eye image; and
the second camera that captures a right eye image,
wherein the encoding unit encodes, as the Base view video stream, the left eye image captured by the first camera, and encodes, as the Non-base view video stream, the right eye image captured by the second camera.

3. The recording apparatus according to claim 1, wherein the encoding unit records information including two values as the information about the optical axis interval, and
the optical axis interval of the first camera and the second camera is represented by subtracting one of the two values from the other of the two values.

4. The recording apparatus according to claim 1, wherein the encoding unit records information including two values as the information about a convergence angle, and
the convergence angle of the first camera and the second camera is represented by subtracting one of the two values from the other of the two values.

5. A recording method comprising the steps of:

encoding an image captured by a first camera and an image captured by a second camera according to H. 264/MPEG-4 MVC;
recording, as SEI of each picture constituting Non-base view video stream, the SEI including at least one of information about an optical axis interval of the first camera and the second camera, information about a convergence angle, and information about a focal length; and
recording, to a recording medium, Base view video stream and the Non-base view video stream recorded with the SEI.

6. A program for causing a computer to execute processing including the steps of:

encoding an image captured by a first camera and an image captured by a second camera according to H. 264/MPEG-4 MVC;
recording, as SEI of each picture constituting Non-base view video stream, the SEI including at least one of information about an optical axis interval of the first camera and the second camera, information about a convergence angle, and information about a focal length; and
recording, to a recording medium, Base view video stream and the Non-base view video stream recorded with the SEI.

7. A reproduction apparatus comprising a decoding unit that decodes Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

8. The reproduction apparatus according to claim 7 further comprising a display control unit that adjusts and displays parallax between an image obtained by decoding the Base view video stream and an image obtained by decoding the Non-base view video stream on the basis of the SEI.

9. The reproduction apparatus according to claim 8, wherein the display control unit causes an image obtained by decoding the Base view video stream to be displayed as a left eye image, and
the display control unit causes an image obtained by decoding the Non-base view video stream to be displayed as a right eye image.

10. A reproduction method comprising the steps of:

decoding Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

11. A program for causing a computer to execute processing including the steps of:

decoding Base view video stream obtained by encoding an image captured by a first camera and an image captured by a second camera according to H.264/MPEG-4 MVC and Non-base view video stream recorded with, as SEI of each picture, SEI including at least one of information about an optical axis interval of the first camera and the second camera, information about a convergence angle, and information about a focal length.

12. A recording reproduction apparatus comprising:

an encoding unit that encodes an image captured by a first camera and an image captured by a second camera according to H.264/MPEG-4 MVC, and records, as SEI of each picture constituting Non-base view video stream, the SEI including at least one of information about an optical axis interval of the first camera and the second camera, information about a convergence angle, and  information about a focal length;
a recording control unit that records, to a recording medium, Base view video stream and the Non-base view video stream recorded with the SEI;
a decoding unit that decodes the Base view video stream and the Non-base view video stream recorded to the recording medium.

FIG. 1

# FIG. 2

# FIG. 3

SUBJECT
P

CONVERGENCE
ANGLE

P L          P R

BASE LINE LENGTH

# FIG. 4

RECORDING UNIT — 22

CAMERA UNIT — 21

RIGHT EYE CAMERA — 31R

IMAGE CAPTURING DEVICE — 12R

11R

LEFT EYE CAMERA — 31L

IMAGE CAPTURING DEVICE — 12L

11L

CAMERA INFORMATION OBTAINING UNIT — 42

MVC ENCODER — 41

NON-BASE VIEW VIDEO ENCODER — 52

BASE VIEW VIDEO ENCODER — 51

COMBINING UNIT — 53

RECORDING CONTROL UNIT — 43

RECORDING MEDIUM — 23

1

EP 2 688 303 A1

19

## FIG. 5

First Non-base view Access Unit in a GOP

View component of Non-base view          nSlices

A

| View and dependency representation delimiter (exactly one) | Subset SPS (exactly one) | PPS(s) | SEI(s) | Slices (Non-base view) | Filler Data (when present) | End of Sequence (when present) | End of Stream (when present) |

| MVC scalable nesting SEI that contains Buffering period SEI (when present) | User data unregistered SEI in MVC scalable nesting SEI | Other SEI messages in MVC scalable nesting SEI (when present) |

Offset metadata

Second or later Non-base view Access Units in a GOP

View component of Non-base view          nSlices

B

| View and dependency representation delimiter (exactly one) | PPS(s) (when present) | SEI(s) (when present) | Slices (Non-base view) | Filler Data (when present) | End of Sequence (when present) | End of Stream (when present) |

EP 2 688 303 A1

## FIG. 6

| Syntax | No. of bits | Mnemonic |
|---|---|---|
| user_data_unregistered(payloadSize) { | | |
|   uuid_iso_iec_11578 | 128 | uimsbf |
|   TypeIndicator | 32 | uimsbf |
|   if(type_indicator == 0x4D 44 50 4D) { | | |
|     ModifiedDVPackMeta() { | | |
|       number_of_modified_dv_pack_entries | 8 | uimsbf |
|       for(i=0;i<number_of_modified_dv_pack_entries;i++) { | | |
|         one_modified_dv_pack() { | | |
|          mdp_id | 8 | uimsbf |
|          mdp_data | 32 | bslbf |
|         } | | |
|       } | | |
|     } | | |
|   } | | |
| } | | |

EP 2 688 303 A1

# FIG. 7

| mdp_id | Name | OVERVIEW |
|--------|------|----------|
| 0x20 | BASELINE LENGTH pack() | BASE LINE LENGTH UNIT [mm] |
| 0x21 | CONVERGENCE ANGLE pack() | CONVERGENCE ANGLE UNIT [°] |

## FIG. 8

| | No. of bits | Mnemonic |
|---|---|---|
| BASELINE LENGTH pack() | | |
|   mdp_id | 8 | uimsbf |
|   mdp_data{ | | |
|    mdp_data1 | 16 | uimsbf |
|    mdp_data2 | 16 | uimsbf |
|    } | | |
| } | | |

EP 2 688 303 A1

## FIG. 9

|  | No. of bits | Mnemonic |
|---|---|---|
| CONVERGENCE ANGLE pack() |  |  |
| mdp_id | 8 | uimsbf |
| mdp_data{ |  |  |
| mdp_data1 | 16 | uimsbf |
| mdp_data2 | 16 | uimsbf |
| } |  |  |
| } |  |  |

EP 2 688 303 A1

# FIG. 10

```
        ┌──────────────────────────┐
        │    START RECORDING       │
        │      PROCESSING          │
        └──────────────────────────┘
                    │
                    ▼
┌────────────────────────────────────────────────────┐ S1
│   ENCODE INPUT IMAGE USING H.264/MPEG-4 MVC         │
└────────────────────────────────────────────────────┘
                    │
                    ▼
┌────────────────────────────────────────────────────┐ S2
│ OBTAIN INFORMATION ABOUT CAMERA OPTICAL AXIS INTERVAL│
│ (BASE LINE LENGTH), CONVERGENCE ANGLE, AND 35 MM     │
│ EQUIVALENT FOCAL LENGTH OF PRESENT MOMENT FROM       │
│              CAMERA UNIT                             │
└────────────────────────────────────────────────────┘
                    │
                    ▼
┌────────────────────────────────────────────────────┐ S3
│  RECORD, TO user_data_unregistered SEI OF PICTURE of│
│  Non-base view VIDEO, BASELINE LENGTH pack(),        │
│  CONVERGENCE ANGLE pack(), and CONSUMER              │
│              CAMERA2 pack().                         │
└────────────────────────────────────────────────────┘
                    │
                    ▼
            ┌──────────────┐ S4
            │   RECORD     │
            └──────────────┘
                    │
                    ▼
              ◇ S5
     IS THERE ANY INPUT IMAGE ? ──── YES
                    │
                   NO
                    │
                    ▼
            ┌──────────────┐
            │     END      │
            └──────────────┘
```

FIG. 11

EP 2 688 303 A1

# FIG. 12

START REPRODUCTION
PROCESSING

S21

DECODE ENCODED DATA OF H.264/MPEG-4 MVC

S22

EXTRACT BASELINE LENGTH pack(), CONVERGENCE
ANGLE pack(), and CONSUMER CAMERA2 pack() from
user_data_unregistered SEI OF PICTURE of
Non-base view VIDEO

S23

PARALLAX ADJUSTMENT
PROCESSING

S24

DISPLAY

S25

ARE THERE DATA TO BE DECODED?

YES

NO

END

# FIG. 13

START PARALLAX ADJUSTMENT PROCESSING

OBTAIN SIZE OF DISPLAY DEVICE — S31

OBTAIN VIEWING DISTANCE — S32

ACQUIRE PARALLAX ON DISPLAY DEVICE — S33

S34

IS PARALLAX ON DISPLAY DEVICE MORE THAN THRESHOLD VALUE?

YES

NO

DISPLAY L IMAGE AND R IMAGE AS THEY ARE — S35

DISPLAY L IMAGE AND R IMAGE UPON SHIFTING IMAGES IN HORIZONTAL DIRECTION SO AS TO REDUCE PARALLAX THEREOF — S36

RETURN

# FIG. 14

RANGE CAPTURED BY
LEFT EYE CAMERA #1

RANGE CAPTURED BY
RIGHT EYE CAMERA #2

$\alpha / 2$

PARALLAX X #3

SUBJECT PLANE

F

HORIZONTAL
VIEW ANGLE q

B

31L

31R

# FIG. 15

RANGE D CAPTURED BY
LEFT EYE CAMERA #1

RANGE D CAPTURED BY
RIGHT EYE CAMERA #2

SUBJECT PLANE

PARALLAX = B #3

F

HORIZONTAL
VIEW ANGLE

B

31L          31R

EP 2 688 303 A1

# FIG. 16

1

RECORDING APPARATUS

| 21 | 22 | 23 | 102 | 103 |
|---|---|---|---|---|
| CAMERA UNIT | RECORDING UNIT | RECORDING MEDIUM | REPRODUCTION UNIT | DISPLAY CONTROL UNIT |

3

DISPLAY APPARATUS

## FIG. 17

EP 2 688 303 A1

## FIG. 18

- 151 CPU
- 152 ROM
- 153 RAM
- 154 (bus)
- 155 INPUT/OUTPUT INTERFACE
- 156 INPUT UNIT
- 157 OUTPUT UNIT
- 158 STORAGE UNIT
- 159 COMMUNICATION UNIT
- 160 DRIVE
- 161 REMOVABLE MEDIUM

| | | |
|---|---|---|
| **INTERNATIONAL SEARCH REPORT** | | International application No. |
| | | PCT/JP2012/063031 |

**A. CLASSIFICATION OF SUBJECT MATTER**
*H04N13/00*(2006.01)i, *H04N5/225*(2006.01)i, *H04N5/91*(2006.01)i, *H04N5/92*(2006.01)i, *H04N7/32*(2006.01)i

According to International Patent Classification (IPC) or to both national classification and IPC

**B. FIELDS SEARCHED**

Minimum documentation searched (classification system followed by classification symbols)
H04N13/00, H04N5/225, H04N5/91, H04N5/92, H04N7/32

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2011/024373 A1  (Panasonic Corp.), 03 March 2011 (03.03.2011), entire text; all drawings & AU 2010288010 A      & CA 2738975 A & CN 102172032 A | 1-12 |
| A | JP 2011-502375 A  (Electronics and Telecommunications Research Institute), 20 January 2011 (20.01.2011), entire text; all drawings & US 2010/0217785 A1    & WO 2009/048216 A1 & KR 10-2009-0037283 A   & CN 101897193 A | 1-12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 July, 2012 (23.07.12) | 14 August, 2012 (14.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

| | **INTERNATIONAL SEARCH REPORT** | International application No. |
| :---: | :--- | :--- |
| | | PCT/JP2012/063031 |

C (Continuation).    DOCUMENTS CONSIDERED TO BE RELEVANT

| Category* | Citation of document, with indication, where appropriate, of the relevant passages | Relevant to claim No. |
| :---: | :--- | :---: |
| A | JP 2010-157826 A  (Victor Company of Japan, Ltd.),<br>15 July 2010 (15.07.2010),<br>entire text; all drawings<br>& EP 2384000 A1          & WO 2010/073513 A1<br>& KR 10-2011-0098858 A   & CN 102265617 A | 1-12 |
| A | WO 2010/085361 A2  (THOMSON LICENSING),<br>29 July 2010 (29.07.2010),<br>entire text; all drawings<br>& JP 2012-516114 A        & AU 2010206977 A<br>& CN 102365869 A          & KR 10-2011-0113752 A | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007280516 A